Europäisches Patentamt

European Patent Office

Office européen des brevets

(19)

(11)  EP 0 834 749 B1

(12)  EUROPÄISCHE PATENTSCHRIFT

(45) Veröffentlichungstag und Bekanntmachung des Hinweises auf die Patenterteilung:
**23.06.1999  Patentblatt 1999/25**

(51) Int Cl.⁶: **G01S 13/74**, G01S 13/76

(21) Anmeldenummer: **97111740.3**

(22) Anmeldetag: **10.07.1997**

(54) **Verfahren und Vorrichtung zur Entfernungsmessung zwischen zwei über einen Kommunikationskanal verbundenen Stationen**

Method and apparatus for measuring distance between two stations linked to each other by a communication channel

Système et dispositif de télémétrie entre deux stations reliées par un canal de communication

(84) Benannte Vertragsstaaten:
**BE CH DE FR GB IT LI SE**

(30) Priorität: **05.10.1996  CH 241596**

(43) Veröffentlichungstag der Anmeldung:
**08.04.1998  Patentblatt 1998/15**

(73) Patentinhaber: **OERLIKON CONTRAVES AG**
**8050 Zürich (CH)**

(72) Erfinder:
- **Wandernoth, Bernhard, Dr. Ing.**
  **9533 Kirchberg (CH)**
- **Serbe, Christoph Peter**
  **8553 Hüttlingen (CH)**

(74) Vertreter: **Hotz, Klaus, Dipl.-El.-Ing./ETH**
**Patentanwalt**
**c/o OK pat AG**
**Hinterbergstrasse 36**
**Postfach 5254**
**6330 Cham (CH)**

(56) Entgegenhaltungen:
**FR-A- 2 269 721**          **US-A- 4 004 098**
**US-A- 4 494 211**

- **M.I. SKOLNIK: "Radar Handbook." 1970 , MC-GRAW-HILL , NEW YORK (US) XP002023215 700409 paragraph 1.3 (pg 1-8 - 1.1-11) "Information available from the radar echo" * pg 1-9 the paragraph "Range" ***

EP 0 834 749 B1

**Beschreibung**

Die Erfindung bezieht sich auf ein Verfahren und eine Vorrichtung zur Entfernungsmessung zwischen zwei über einen optischen Kommunikationskanal verbundenen Stationen, insbesondere zwischen zwei Satelliten im Weltraum, nach dem Oberbegriff des Patentanspruchs **1** bzw. **7**.

Bei Satellitensystemen, die aus mehreren Satelliten bestehen, ist es oft wünschenswert beziehungsweise notwendig, die Entfernung zwischen den Satelliten zu kennen, um die Lageregelung zu unterstützen und Kollisionen zu vermeiden. Die bisher praktizierte Vermessung der Satellitenposition vom Boden aus erlaubt zwar eine verhältnismässig genaue Entfernungsmessung, ist aber bei in dichter Nachbarschaft von nebeneinander positionierten Satelliten nur mit sehr grossem Aufwand möglich.

Für die dadurch notwendige Entfernungsbestimmung zwischen den Satelliten innerhalb einer in dichter Folge plazierten Gruppe können die bekannten Verfahren verwendet werden.

Zu nennen sind

- die Messung der Laufzeit eines kurzen Impulses auf der zu vermessenden Strecke zwischen zwei Satelliten,
- die Korrelation einer bekannten, aber regellos erscheinenden Folge von Datenbits (Pseudo-Zufallsfolge).

Beide Verfahren benötigen eine Übertragungsbandbreite, die umgekehrt proportional zur geforderten Messauflösung ist. Lösungsbeispiele für beide Prinzipien können der gängigen Literatur über Radartechnik entnommen werden. In jedem Fall benötigt eine gesondert für diesen Zweck vorgesehene Apparatur ein gewisses Volumen und weist ein für Raumfahrtanwendungen erhebliches Gewicht und einen beträchtlichen Energiebedarf auf, was als erheblicher Nachteil angesehen wird.

So existieren beispielsweise optische Apparaturen und Verfahren zur genauen Bestimmung von Signallaufzeiten bzw. Entfernungen, wobei durch Korrelation von gesendeter und empfangener Pseudo-Zufallsfolge die durch die Übertragungsbandbreite gegebene Entfernungsauflösung unterschritten werden kann (**H. Geiger et al., New OTDR Technique for Monitoring the Range of Reflective Markers, 10th Optical Fibre Sensors Conference, p. 150-153**). Übertragen auf optische Verbindungen zwischen Satelliten besteht die zusätzliche Eigenschaft der hohen Winkelauflösung eines optischen Systems.

Im weiteren ist aus der **US-4,494,211** ein Verfahren bekannt, das es erlaubt, auf einem mit Hilfe eines Kommunikationskanals mit Hilfe einer besonders ausgebildeten Vorrichtung die Entfernung zwischen zwei Satelliten zu messen. Während der Übertragung eines Signals durch den Kommunikationskanal wird die Laufzeit eines besonderen Entfernungsmesssignals gemessen und aus dem Messergebnis auf die Distanz der beiden Satelliten geschlossen. Zur Laufzeitmessung werden im wesentlichen zwei besondere Teile der Einrichtung benötigt. Der erste Teil beinhaltet folgendes: Der Kommunikationskanal ist während bestimmter Zeitintervalle für die normale Datenübertragung gesperrt. Anstelle der normalen Daten werden spezifische, zur Messung der Laufzeit benötigte Daten übertragen. Hierunter fallen insbesondere Rahmensynchronisationssignale, die den Startpunkt der Laufzeitmessung definieren, sowie Informationen über die aktuelle Uhrzeit, so dass die Laufzeit als Zeitunterschied zwischen dem Aussenden des Beginnes des Rahmens durch die erste Station und dem Empfang der entsprechenden Antwort von der zweiten Station gebildet werden kann. Die hohe Auflösung, die für die Übertragung der Zeitinformationen erforderlich ist, bedingt eine grosse Präzision für den Zeitpunkt der Aussendung des Rahmens als Start der Laufzeitmessung, das heisst, die einzelnen Bits der zu übertragenden Daten müssen zu genau bekannten Zeitpunkten gesendet werden. Dazu dient der zweite Teil der Einrichtung. Die Daten werden synchron zu einem Taktsignal ausgesendet, das auf Bruchteile einer nominalen Taktperiode feinjustiert werden kann. Dazu dient ein spezieller Steuereingang des Taktgenerators, mit dem die Phasenlage des Taktsignals in kleinen Schritten verändert werden kann. Zusätzlich ist eine Messeinrichtung vorgesehen, mit der ein zeitlicher Versatz der Takte der empfangenen und auszusendenden Signale gemessen werden kann. Aus dieser Information wird dann das hochpräzise Ergebnis der Laufzeitmessung berechnet. Die Nachteile dieses Systems, bei welchem das technische Problem einer hochauflösenden Entfernungsmessung über einen langsamen Kommunikationskanal gelöst wird, besteht unter anderem darin, dass der massenmässige apparative Aufwand und der Stromverbrauch verhältnismässig gross sind.

Es ist Aufgabe der vorliegenden Erfindung, die Nachteile des Standes der Technik zu vermeiden und eine zuverlässige Möglichkeit aufzuzeigen, unter Ausnutzung eines bestehenden Übertragungssystems genaue Laufzeit- und Entfernungsmessungen durchzuführen.

Die Lösung dieser Aufgabe erfolgt gemäss der Erfindung durch ein Verfahren und eine Vorrichtung mit den im kennzeichnenden Teil des Anspruchs **1** bzw. **7** angegebenen Merkmalen.

Als Vorteil durch das erfindungsgemässe Verfahren ergibt sich, dass die Entfernungsmessung über bereits bestehende hochratige Datenverbindungen zwischen den beweglichen Stationen eines Netzes, z. B. zwischen Satelliten, vorgenommen wird. so dass gesonderte Entfernungsmesser nicht erforderlich sind.

Weitere Einzelheiten, Merkmale und Vorteile der Erfindung ergeben sich nicht nur aus den Ansprüchen und den diesen zu entnehmenden Merkmalen - für sich und/oder in Kombination, sondern auch aus der nachfolgenden Beschreibung der bevorzugten Ausführungsbeispiele. Es zeigen:

| | |
|---|---|
| **Fig. 1** | Eine schematische Darstellung des Verfahrens zur Entfernungsmessung zwischen zwei Satelliten. |
| **Fig. 2,4,6,11** | beispielhafte Blockschaltbilder für verschiedene Implementierungen der Entfernungsmessung in einen senderseitigen Teil eines Satelliten. |
| **Fig. 3, 5 und 7** | beispielhafte Blockschaltbilder für verschiedene Implementierungen der Entfernungsmessung in einen empfängerseitigen Teil eines Satelliten. |
| **Fig. 8, 9 und 10** | beispielhafte Blockschaltbilder für verschiedene Implementierungen von Speichern in einen senderseitigen und/oder empfängerseitigen Teil eines Satelliten. |

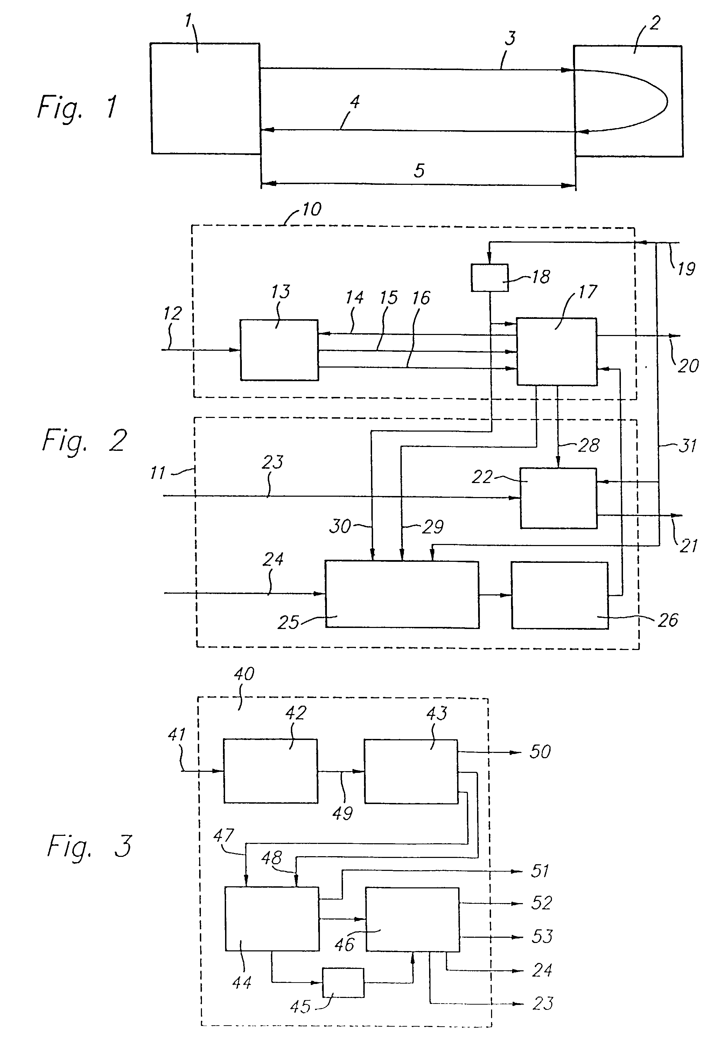

**Fig. 1** zeigt schematisch den Ablauf der Entfernungsmessung zwischen einer Station bzw. einem Satelliten A **1** und einer Station bzw. einem Satelliten B **2**. Das Verfahren beruht auf einer Kommandostruktur, bei welcher der Satellit, der die Entfernung bestimmen will, über einen Intersatelliten-Kommunikationskanal eine Entfernungsabfrage **3** an den anderen Satelliten sendet, der daraufhin diese Entfernungsabfrage **3** mit einer Antwort **4** quittiert.

Die Entfernung ergibt sich wie folgt:

$$Entfernung = c \cdot T_R = c \cdot \frac{T_{Umlauf} - T_1 - T_2}{2}$$

wobei $c$ die Lichtgeschwindigkeit im freien Raum, $T_R$ die Laufzeit **5** von einem Satelliten zum anderen, $T_{Umlauf}$ die gesamte Umlaufzeit, sowie $T_1$ und $T_2$ die durch Verarbeitungszeiten (Prozesszeiten) in den Satelliten bedingten Verzögerungen sind.

Falls die beiden folgenden Bedingungen erfüllt sind, nämlich dass sowohl die zeitliche Position der Befehle im Datenstrom als auch die Zeit für die Bearbeitung der Befehle in beiden an der Entfernungsmessung beteiligten Satelliten genau bekannt ist, ist auf diese Weise die Messung der Entfernung in der zeitlichen Auflösung eines halben Datenbits des benutzten Kommunikationskanals möglich. So ist zum Beispiel bei einer Datenrate von 1Gbit/s eine Auflösung von 15 cm gegeben.

Mittels Korrelation der Datenbits kann man die Auflösung sogar noch weit unter die halbe Bitlänge drücken.

Generell ist jede Datenübertragungsstrecke für die Implementation der erfindungsgemäs-sen Entfernungsmessung geeignet, sofern die Datenrate zur Erzielung der gewünschten Auflösung ausreichend ist. Es müssen also lediglich die Kommandos in den Datenstrom multiplexbar sein, wobei es wesentlich ist, dass deren zeitliche Position im Datenstrom auf ein Bit genau bekannt ist.

Besonders einfach ist die Implementation bei Übertragungskanälen, bei denen ein niederratiger Zusatzkanal bitsynchron zur Verfügung steht. Solche Zusatzkanäle werden in der Regel zur Systemverwaltung und Übertragung von Betriebsparametern eingerichtet. In einer solchen Anordnung können die Befehle und Informationen zur Entfernungsmessung über diesen Zusatzkanal übertragen werden, so dass die Übertragung der Nutzdaten unangetastet bleibt.

In der deutschen Patentschrift **DE-PS 41 10 138 C1** wird ein Synchronisationsbit-Verfahren bzw. Syncbit-Verfahren als ein vorteilhafter Weg beschrieben, um die Phase des überlagernden Lichts an derjenigen des Signallichts auszurichten. Hierzu wird in regelmässigen Zeitabständen für die Dauer eines Datenbits das Licht des optischen Senders auf die Phase des im Empfänger zu überlagernden Lichts eingestellt. Für kleine Abweichungen der Phase des überlagernden Lichts ist der im Detektor erzeugte Photostrom ungefähr proportional zur Phasendifferenz. Das hierdurch gewonnene Fehlersignal kann zur Nachregelung verwendet werden. Der Abstand einzelner Synchronisationsbits bzw. Syncbits zueinander ist durch die Phasenstabilität beider Lasersysteme bestimmt. In der Regel wird jedes 9te bis 33te Datenbit durch ein Syncbit ersetzt, womit der theoretisch maximal mögliche Abstand zwischen zwei Syncbits meistens nicht erreicht wird.

Eine weitere Patentanmeldung Nr. **CH-2414/1996** beinhaltet die Nutzung eines geringen Teils der regelmässig eingefügten Syncbits zur niedrigratigen Übertragung von Daten. Dies wird dadurch erreicht, dass in regelmässigen Abständen innerhalb der kontinuierlichen Reihe der in den Nutzdatenstrom eingefügten Syncbits die Phase des zur Übertragung genutzten Lichts nicht den Sollwert der Phase des überlagernden Lichts, sondern ebenfalls einen zur Datenübertragung vorgesehenen Wert annimmt. Der Empfänger weist bereits die zur Extraktion der Syncbits notwendigen Merkmale auf und kann mit geringem Aufwand zur Detektion der eingefügten Datenbits nachgerüstet werden.

Anstatt eines Demultiplexers ist nur ein Zähler erforderlich zur Erfassung des Abstandes zwischen den in die Reihe der Syncbits eingefügten Datenbits. Da nur ein geringer Teil der Syncbits auf diese Weise verletzt wird, besteht keine wesentliche Beeinträchtigung der eigentlichen Funktion dieser Signale, gleichzeitig sinkt die Datenrate des dadurch gewonnenen zusätzlichen Kanals in gewünschtem Masse auf im Vergleich zur Nutzdatenrate niedrige Werte. Allerdings kann die Verletzung eines Syncbits nicht mit der gleichen Sicherheit detektiert werden wie zwischen den beiden zur Übertragung der Nutzdaten verwendeten Signalpegel entschieden werden kann, da der Unterschied des Photostroms halbiert ist. Da optische Leistung in elektrischen Strom umgesetzt wird und das Quadrat des Photostroms proportional zur Leistung des detektierten Signals ist, ist die vierfache optische Leistung des Signallichts notwendig, um diese Einbusse zu kompensieren. Zur Erhöhung der Übertragungssicherheit erweist es sich daher als vorteilhaft, das einzelne im zusätzlichen Kanal zu übertragende Bit durch mehrere aufeinander folgende Signale, d.h. Syncbitverletzungen, zu codieren. Insbesondere gewährleistet eine gerade Anzahl aufeinander folgender alternierender Signalpegel ein mittelwertfreies Signal, wodurch eine fehlerhafte Nachführung der Phase des überlagernden Lichts vermieden wird.

Als Vorteil durch das beschriebene Verfahren ergibt sich dabei, dass über einen bestehenden optischen Übertragungskanal ein Zusatzkanal übertragen werden kann, ohne dass mehr Leistung oder grössere Bandbreite benötigt wird. Ein weiterer Vorteil besteht in der sehr einfachen technischen Implementierung, da keine speziellen und aufwendigen Multiplexierer und Demultiplexierer verwendet werden müssen. Schliesslich kann durch sehr einfache Massnahmen im Zusatzkanal eine sehr geringe Bitfehlerwahrscheinlichkeit erreicht werden.

Die Vorteile des erfindungsgemässen Verfahrens zur Entfernungsmessung zwischen beweglichen Stationen bzw. Satelliten bestehen darin, dass

- kein gesondertes Entfernungsmessgerät erforderlich ist
- eine hohe Genauigkeit der Entfernungsmessung möglich ist
- der schaltungstechnische Zusatzaufwand gering ist
- der zusätzliche Leistungsbedarf niedrig ist.

Der Vorteil der Kombination des Syncbit-Verfahrens mit der Übertragung eines Zusatzkanals in Verbindung mit der Übertragung der Entfernungsabfrage und Antwort in diesem Zusatzkanal besteht darin, dass trotz niederratiger Übertragung die genau definierte Position der Syncbits im Nutzdatenstrom es ermöglicht, die Entfernungsmessung mit einer Auflösung vorzunehmen, welche der halben Länge eines Nutzdatenbits auf der Übertragungsstrecke entspricht.

**Fig. 2** zeigt ein Blockschaltbild für die Implementierung der Entfernungsmessung in einen senderseitigen Teil eines Satelliten mit einer Zusatzkanal Verarbeitungs Einheit **10** und einer Entfernungsmessungs Einheit **11**. Die Zusatzkanal Verarbeitungs Einheit **10** weist einen Datenbus **12** auf, der den Eingang eines Interface **13** bildet. Der Ausgang des Interface **13** ist über eine erste Datenleitung **16** mit einem Eingang eines Multiplexers **17** verbunden. Ein Teiler **18** bildet einen weiteren Eingang des Multiplexers **17**. Ein Eingang dieses Teilers **18** wird vom Kanaldatentakt **19** gespeist. Im weiteren steht der Multiplexer **17** über je eine Hintaktleitung **14** und eine Rücktaktleitung **15** mit dem Interface **13** in Verbindung.

Die Entfernungsmessungs-Einheit **11** weist einen ersten Zähler **25** auf, dessen erster Eingang über eine dritte Leitung **24** mit dem Empfänger (siehe **Fig. 3**) des Satelliten verbunden ist. Weitere Eingänge dieses ersten Zählers **25** sind einerseits über eine Taktleitung **31** mit dem Kanaldatentakt **19** verbunden und andererseits über eine Rahmentaktleitung **30** mit dem Ausgang des Teilers **18**. Ein Start-Eingang eines zweiten Zählers **22** der Entfernungsmessungs Einheit **11** ist ebenfalls mit einem Ausgang des Multiplexers **17** der Zusatzkanal Verarbeitungs Einheit **10** verbunden. Der Stop-Eingang diese zweiten Zählers **22** ist über eine zweite Leitung **23** mit dem Empfänger (siehe **Fig. 3**) des Satelliten verbunden.

Der Ausgangs des ersten Zählers 25 ist mit einem Codierer **26** verbunden.

Die Zusatzkanal Verarbeitungs Einheit **10** in **Fig. 2** dient zur niedrigratigen Übertragung von betriebsrelevanten Daten im Zusatzkanal und besteht aus dem Interface **13**, dem Multiplexer **17** und dem Teiler(=Zähler) **18**.

Die über den Zusatzkanal zu übertragenden Daten werden über einen parallelen oder seriellen Datenbus **12** von einem System Controller (Steuer-Rechner) auf das Interface **13** geschickt, welches die Aufgabe hat, die zu übertragenden Daten über die erste Datenleitung **16** zu den durch die Taktleitungen **14** und **15** gegebenen erforderlichen Zeiten an den (Zusatzkanal Encoder/ Rahmen)- Multiplexer **17** zu übergeben.

Dieser hat die Aufgabe, die Daten in entsprechende Syncbit-Verletzungen umzusetzen, wie es ein Verfahren zur Übertragung eines Zusatzkanals nach der *CH-Patentanmeldung Nr. 2414/1996* erfordert. Natürlich führt dies nur zu relativ dünn eingestreuten Syncbit Verletzungen, die zudem pro Bit in mehrfacher, gerader Anzahl alternierend aufeinanderfolgend erfolgen mit entsprechenden Pausen zwischen den einzelnen zu encodierenden Bits, um die Synchronisationsfunktion nicht zu gefährden. Dem Zusatzkanal Encoder/Multiplexer **17** wird durch den Teiler **18** der über die Rahmentaktleitung **30** der durch N geteilte Kanal-datentakt **19** zugeführt, da nur jedes N-te Bit im Nutzdatenstrom ein Syncbit ist, von denen ein geringer Teil für den Zusatzkanal genutzt wird. Die Information, ob in dem aktuell einzufügenden Syncbit die Sollphase des überlagernden Lichts des Empfängers, oder eine Abweichung um ± 90 Grad zur Übertragung von Daten übertragen werden soll, wird über eine zweite Datenleitung **20** zum Kanalmultiplexer geschickt, der die Aufgabe hat, entsprechend dem an der zweiten Datenleitung **20** anliegenden Signal die Phase des Lichts des Senders im für das Syncbit vorgesehenen Zeitintervall einzustellen.

**Fig. 3** zeigt ein Blockschaltbild für die Implementierung der Entfernungsmessung in einen empfängerseitigen Teil eines Satelliten mit einer weiteren Zusatzkanal Verarbeitungs Einheit **40**. Diese Zusatzkanal Verarbeitungs Einheit **40** weist Kanaldaten **41** des Zusatzkanals auf die zu einer Erkennungseinheit **42** weitergeleitet werden. Über eine weitere Leitung **49** ist der Ausgang der Erkennungseinheit **42** mit einem Eingang eines Takt-Regenerators **43** verbunden. Zwei Ausgänge des Takt-Regenerators **43** sind über die beiden Taktleitungen **47** und **48** mit den Eingängen eines Rahmen Synchronisierers **44** verbunden. Ein Ausgang des Rahmen Synchronisierers **44** ist mit dem Eingang eines Demultiplexers **46** verbunden. Ein weiterer Ausgang des Rahmen Synchronisierers **44** ist mit dem Eingang eines Phase Lokked Loop-Taktoszillators **45** und dessen Ausgang bildet ein weiteres Eingangssignal für den Demultiplexer **46**. Ein weiterer Ausgang des Rahmen Synchronisierers **44** stellt am Ausgang der Zusatzkanal Verarbeitungs Einheit **40** an einer Taktleitung **51** den Rahmentakt für den Zusatzkanal zur Verfügung. Über die beiden Datenleitungen **23** und **24** ist der empfängerseitige Teil eines Satelliten mit dem senderseitigen Teil eines Satelliten verbunden. Über Busleitungen **52** und **53** stehen die Zusatzkanaldaten zur Verfügung.

Innerhalb des Empfängers befindet sich die in **Fig. 3** dargestellte Zusatzkanal Verarbeitungs Einheit **40**. Die Zusatzkanaldaten werden durch die Erkennungseinheit **42** aus den Kanaldaten **41** selektiert. Dies geschieht, wie in der Anmeldung CH-2414/1996 beschrieben, durch die Erkennung der Synchronisationsbis bzw. Syncbits und deren Verletzungen, die in den durch die unverletzten Syncbits gegebenen periodisch wiederkehrenden Zeitintervallen auftreten. Die Syncbits sind durch einen niedrigen Signalpegel erkennbar, der dem geringen zwischen der Aussendung von zwei Syncbits entstehenden Phasenunterschied zwischen der Lichtwelle des Senders und der überlagernden Lichtwelle entspricht. Anhand des Zeitpunktes mehrerer bereits übertragener Syncbits kann der Zeitpunkt des Auftritts folgender Syncbits geschätzt werden und der dann gemessene Signalpegel entweder einem unverletzten Syncbit zugeordnet werden, oder aber als Verletzung eines Syncbits erkannt werden. Über die weitere Leitung **49** wird der in den durch die verletzten und unverletzten Syncbits belegten Zeitintervallen abgetastete Signalpegel auf den Zusatzkanal/Takt Regenerator **43** geführt, in welchem anhand des anliegenden Signalpegels, möglicherweise durch Soft-Decision, die einzelnen im Zusatzkanal übertragenen Bits aus den Syncbitverletzungen wiedergewonnen werden. Zusätzlich wird aus der wiedergewonnenen Biffolge ein Taktsignal erzeugt. Beide Signale werden über Taktleitungen **47** und **48** an die Zusatzkanal Rahmensynchronisation **44** übergeben, in welcher ein Steuersignal für den Phase Locked Loop-Taktoszillator **45** erzeugt wird, dessen Taktsignal dem Zusatzkanal Demultiplexer Decoder **46** ermöglicht, die in einem Zeitmultiplex-Rahmen seriell übertragenenen Zusatzkanaldaten parallel auf die Bus- Leitungen **52** bis **53** des Zusatzkanal Daten-Bus zu demultiplexieren. Ausserdem werden zwei Bitfolgen erkannt, die für die Aufforderung zur Entfernungsmessung sowie die Antwort auf die Aufforderung zur Entfernungsmessung vereinbart sind. Die Erkennung von ersterer wird auf der dritten Leitung **24**, die der letzeren auf der zweiten Leitung **23** signalisiert. Takt-Leitung **50** signalisiert, ob der Zusatzkanal Takt erzeugt wird, Takt-Leitung **51** signalisiert, ob der Rahmen des Zusatzkanals erkannt wird.

Eine Entfernungsmessung mittels der in **Fig. 2** und **Fig. 3** dargestellten Vorrichtungen findet wie im folgenden beschrieben statt:

Vom Systemcontroller(Steuer-Rechner) wird über den Datenbus **12** eine Biffolge Zusatzkanaldaten auf das Interface **13** geschickt, die als Aufforderung zu einer Entfernungsmessung vereinbart ist. Diese Bitfolge wird durch den Multiplexer **17** in die entsprechende Syncbit-Folge umgesetzt und zum Kanalmultiplexer geschickt. Gleichzeitig wird diese Bitfolge im Multiplexer **17** als Aufforderung zur Entfernungsmessung erkannt und dadurch über eine vierte Leitung **28** der zweite Zähler **22** gestartet. Dieser beginnt nun durch den Kanaldatentakt **19** die Zahl der insgesamt gesendeten Bits im Nutzdatenkanal zu zählen. Die in die Kanaldaten eingefügten verletzten Syncbits erreichen den Empfänger der Gegenstation, in welchem innerhalb der Zusatzkanal Verarbeitungs Einheit **40** die als Aufforderung zur Entfernungsmessung vereinbarte Bitfolge erkannt und dies auf der dritten Leitung **24** signalisiert wird. Die dritte Leitung **24** führt die Signalisierung zum Zähler **25** der Gegenstation, welcher nun mit dem Rahmentakt der Rahmentaktleitung **30** die Zahl der Syncbits zu zählen beginnt, bis über die Leitung **29** durch den Multiplexer **17** der Gegenstation der Beginn der Rücksendung der Antwort zur Aufforderung zur Entfernungsmessung signalisiert wird. Da die Signalisierung der Aufforderung zur Entfernungsmessung im allgemeinen zwischen zwei Syncbits beim Zähler **25** eintrifft, wird die dazwischenliegende Zahl an Nutzkanalbits über die Leitung **31** ebenfalls gezählt. Zusätzlich wird eine statische Verzögerung addiert, durch welche die Laufzeiten der Signale durch die verschiedenen Funktionsblöcke berücksichtigt wird.

Beide Zahlen fliessen in die Codierung des Codierers **26** der Antwort zur Aufforderung zur Entfernungsmessung ein, die in den Multiplexer **17** der Gegenstation geführt wird. Die Antwort enthält neben einer vereinbarten Bitfolge zu deren Kennzeichnung auch die im Zähler **25** gezählten Syncbit- und Nutzdatenbit-Intervalle sowie die statische Verzögerung, wodurch in der auffordernden Station die Prozesszeit innerhalb der Gegenstation ermittelt und von der gesamten Verzögerungszeit abgezogen werden kann.

Die auffordernde Station erhält nun die Antwort zur Aufforderung zur Entfernungsmessung über den Zusatzkanal zurückgesendet. In der Zusatzkanal-Verarbeitungs-Einheit **40** der auffordernden Station wird die codierte Antwort der Gegenstation erkannt und dies über die Leitung **23** signalisiert. Die Leitung **23** führt diese Signalisierung auf den Zähler **22** der auffordernden Station, wodurch die Zählung der Nutzkanalbits gestoppt wird. Deren Zahl steht nun auf dem Bus **21** dem System Controller (Steuer-Rechner) zur Verfügung zur Bestimmung der Entfernung. Im System Controller (Steuer-Rechner) wird diese Zahl mit der Dauer des einzelnen Bits im Nutzdatenkanal multipliziert und der dadurch gewonnenen Verzögerungszeit die Verarbeitungszeiten in beiden Stationen abgezogen. Die Verarbeitungszeit in der Gegenstation ergibt sich aus den durch den Zähler **25** ermittelten, der Antwort zugefügten Anzahl von bis zur Absetzung der Antwort durch die Gegenstation gesendeten Syncbits und Nutzdatenbits sowie der (festen) Ausbreitungszeit der Aufforderung innerhalb der Gegenstation. Diese Information ist nach deren Übertragung in den System Controler über die Leitungen **52** bis **53** durch diesen verfügbar. Die verbliebene Zeitdifferenz zwischen Aufforderung und Antwort wird halbiert, da die Strecke zwischen den beiden Stationen zweimal durchlaufen wird, und mit der im Medium gegebenen Gruppengeschwindigkeit (Lichtgeschwindigkeit) multipliziert.

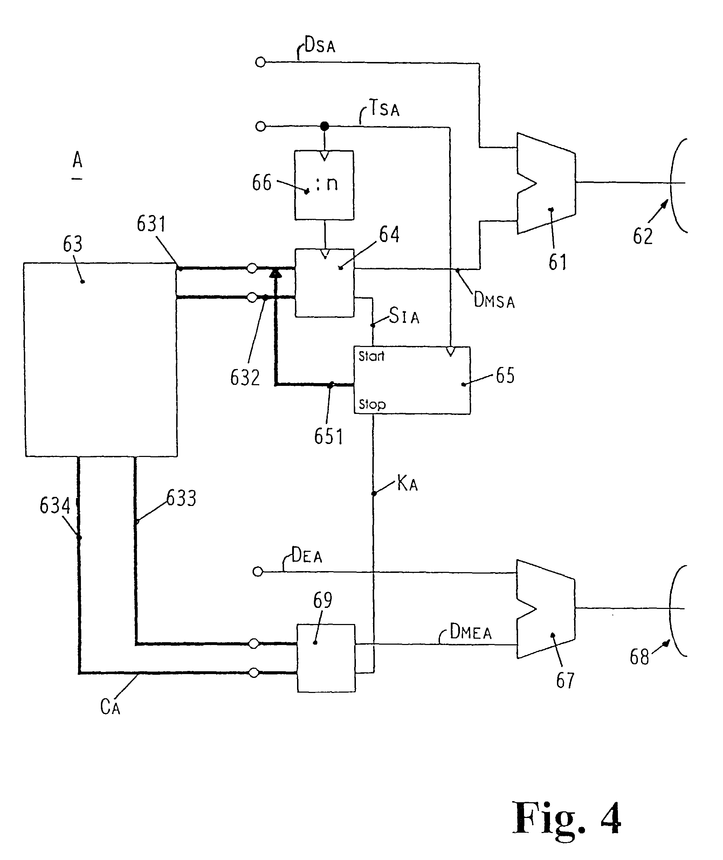

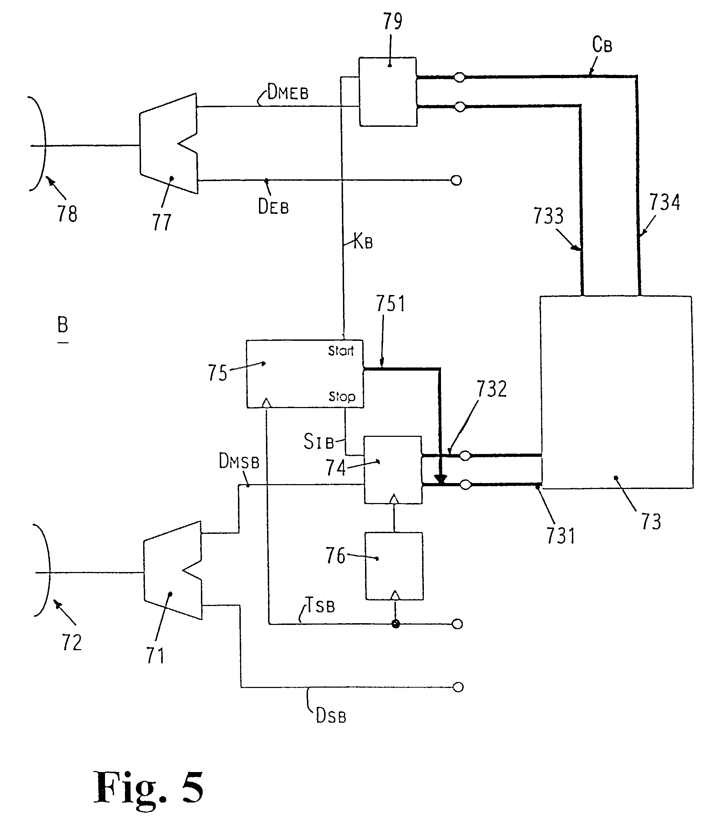

Das Verfahren zur Entfernungsmessung mittels eines multiplexierten Subkanals kann in weiterer Ausgestaltung der Erfindung beispielsweise mit Hilfe eines Terminals **A** nach **Fig. 4** und eines Gegenterminals **B** nach **Fig. 5** durchgeführt werden. Die Terminale **A** und **B** werden auch erste bzw. zweite Station genannt. Im Terminal **A** ist ein Subkanal-Multiplexer **61** vorhanden, dessen Ausgangssignal einer Sendereinheit **62** zugeführt wird. Eingangsseitig kann der Subkanal-Multiplexer **61** beispielsweise mit mehreren, mit einer grossen Bitrate übertragenen, bereits für sich multiplexierten Nutzdatensignalen **Dsa** sowie mit einem Subkanal-Datensignal **Dmsa** beaufschlagt werden, das in einem Terminal-Kontroller **63** erzeugt und über einen Bus **631** und einen Subkanal-Kontroller **64** geführt wird, der über einen weiteren Bus **632** für Entfernungsmess-Steuer-Signale, auch Range-Steuer-Signale (range command) genannt, ebenfalls an den Terminal-Kontroller **63** angeschlossen ist. Im Terminal-Kontroller **63** wird auch ein Steuersignal **Sia** erzeugt, das über den Bus **631** oder gegebenenfalls den Bus **632** und über den Subkanal-Kontroller **64** einem Subkanal-Zähler **65** zugeführt wird. Ein Taktsignal Tsa grosser Bitrate wird dem Takteingang des Zählers **65** sowie über einen Teiler **66** dem Takteingang des Kontrollers **64** zugeführt. Im Terminal **A** ist auch ein Subkanal-Demultiplexer **67** vorhanden, der eingangsseitig an eine Empfängereinheit **68** angeschlossen ist, und der ausgebildet ist, um ausgangsseitig beispielsweise mehrere multiplexierte Nutzdatensignale **Dea** mit grosser Bitrate sowie ein Subkanal-Daten-Signal Dmea abzugeben, das über einen Subkanal-Diskriminator (Interpreter) **69** und einen Datenbus **633** dem Terminal-Kontroller **63** zugeführt wird. Der Subkanal-Diskriminator **69** ist ausgebildet, um über einen Bus **634** ein Range-Steuer-Signal **Ca** für den Terminal-Kontroller **63** und um ein Stopp- oder Steuer-Signal **Ka** für den Zähler **65** zu liefern, der zusätzlich mit einem weiteren an den Bus **631** angeschlossenen Range-Daten-Bus **651** verbunden ist, um Range-Daten-Signale zu liefern.

Im Gegenterminal **B** ist ein Subkanal-Multiplexer **71** vorhanden, dessen Ausgangssignal einer Sendereinheit **72** zugeführt wird. Eingangsseitig kann der Multiplexer **71** beispielsweise mit mehreren, mit einer grossen Bitrate übertragenen, bereits multiplexierten Nutzdatensignalen **Dsb** sowie mit einem Subkanal-Daten-Signal **Dmsb** beaufschlagt werden, das in einem Terminal-Kontroller **73** erzeugt und über einen Bus **731** und einen Subkanal-Kontroller **74** geführt wird, der über einen weiteren Bus **732** für Range-Steuer-Signale an den Terminal-Kontroller **73** angeschlossen ist. Im Terminal-Kontroller **73** wird auch ein Steuersignal **Sib** erzeugt, das über den Bus **731** oder gegebenenfalls über den Bus **732** und über den Subkanal-Kontroller **74** einem Subkanal-Zähler **75** zugeführt wird. Ein Taktsignal **Tsb** grosser Bitrate wird dem Takteingang des Zählers **75** sowie über einen Teiler **76** dem Takteingang des Kontrollers **74** zugeführt. In diesem Gegenterminal **B** ist auch ein Subkanal-Demultiplexer **77** vorhanden, der eingangsseitig an eine Empfängereinheit **78** angeschlossen ist, und der ausgebildet ist, um ausgangsseitig beispielsweise mehrere NutzdatenSignale **Deb** mit grosser Bitrate sowie ein Subkanal-Datensignal **Dmeb** abzugeben, das über einen Subkanal-Diskriminator **79**, und einen Datenbus **733** dem Terminal-Kontroller **73** zugeführt wird. Der Subkanal-Diskriminator **79** ist ausgebildet, um über einen Bus **734** ein Range-Steuer-Signal **Cb** für den Terminal-Kontroller **73** und um ein Steuer-Signal **Kb** für den Zähler **75** zu liefern, der zusätzlich mit einem weiteren an den Bus **731** angeschlossenen Range-Daten-Bus **751** verbunden ist, um Range-Daten-Signale zu liefern.

Die Entfernungsmessung mit den Vorrichtungen nach **Fig. 4** und **5** nach der Subkanalmethode wird wie folgt durchgeführt:

Der Initiator der Messung ist der das Signal **Sia** lieferndeTerminal-Kontroller **63** des Terminals A (**Fig. 4**), während das Gegenterminal **B** nur auf ein entsprechendes Subkanal-Steuersignal reagiert.

Nachdem der Subkanal-Kontroller **64** eine Aufforderung zur Entfernungsmessung bekommen hat, wird eine im Terminal-Kontroller **63** erzeugte Range-Abfrage-Signatur, auch "Range Request" genannt, erzeugt. Diese wird vom Signal **Dmsa** über den Subkanal-Kontroller **64**, den Subkanal-Multiplexer **61** und die Sendereinheit **62** zum Gegenterminal **B** gesendet.

Beim Aussenden des Signals **Dmsa** wird mit Hilfe des Signals **Sia** ein Zählprozess im Subkanal-Zähler **65** gestartet, um einen ersten Zählwert **n1** zu ermitteln. Die Taktrate dieses Zählers **65** wird wesentlich höher als die Subkanal-Bitrate gewählt, um eine möglichst hohe Auflösung der Entfernungsmessung zu erreichen. Als Taktquelle kommt beispielsweise der Takt der Nutzdaten **Dsa** in Betracht, der in aller Regel wesentlich über der Subkanal-Bitrate liegt.

Im Demultiplexer 77 des Gegenterminals B (**Fig. 5**) werden die Signale **Dmeb** und **Deb** getrennt. Die multiplexierten Signale **Deb** enthalten dieselbe Information der Signale **Dsa,** jedoch zeitverzögert; entsprechendes gilt für die Signale **Dmeb** und **Dmsa**. Im Subkanal-Diskriminator 79 wird das empfangene Signal **Dmeb**, das heisst die Range-Abfrage-Signatur, geprüft, und beim Erkennen der Signatur wird durch das Signal **Kb** der Zähler 75 gestartet, um einen zweiten Zählwert **n2** zu ermitteln.

Zudem wird beispielsweise durch einen Steuerrechner oder durch den Terminal-Kontroller 73 dieses Gegenterminals **B** das Senden einer Antwort initiiert.

Der Subkanal-Kontroller 74 sendet nun eine Range-Antwort-Signatur, auch ,,Range Answer" genannt, das heisst ein Signal **Dmsb**, über den Subkanal-Multiplexer 71 und die Sendereinheit 72 an das Terminal **A**, wobei beim Aussenden dieses Signals **Dmsb** der Zähler 75 durch das Signal **Sib** gestoppt wird; zugleich wird die Information über den letzten Zählerstand **n2** über den Bus 751 und diesen Subkanal-Multiplexer 71 zum Terminal **A** gesendet. Es ist zu berücksichtigen, dass dann der Stand **n2** des Zählers 75 genau der Zeit entspricht, die zwischen dem Empfang der Range-Abfrage und dem Aussenden der Range-Antwort, mithin also der Verarbeitungszeit des Gegenterminals **B**, verstrichen ist. Die Messung, beispielsweise in diesem Fall durch den Zählwert **n2**, dieser Verarbeitungszeit ist von besonderem Interesse, weil sie nicht deterministisch bzw. im voraus bestimmt werden kann; denn das Aussenden der verschiedenen Signaturen kann nur zu bestimmten Zeiten erfolgen, nämlich durch die Subkanal-Bits.

Beim Empfang der Range-Antwort-Signatur, das heisst des Signals **Dmea** im Terminal **A** wird durch das Signal **Ka** der Zähler 65 gestoppt. Der Stand **n1** dieses Zählers 65 wird sodann über den Bus 651 zum Terminal-Kontroller 63 übertragen.

Schliesslich führt der Terminal-Kontroller 63 die Berechnung der Entfernung gemäss folgender Formel durch:

$$L = c.(n1.Tsa - n2.Tsb)/2 - Ko$$

worin **c** die Lichtgeschwindigkeit und **Ko** eine Korrekturkonstante ist, und wobei vorzugsweise **Tsa** = **Tsb** gewählt wird.

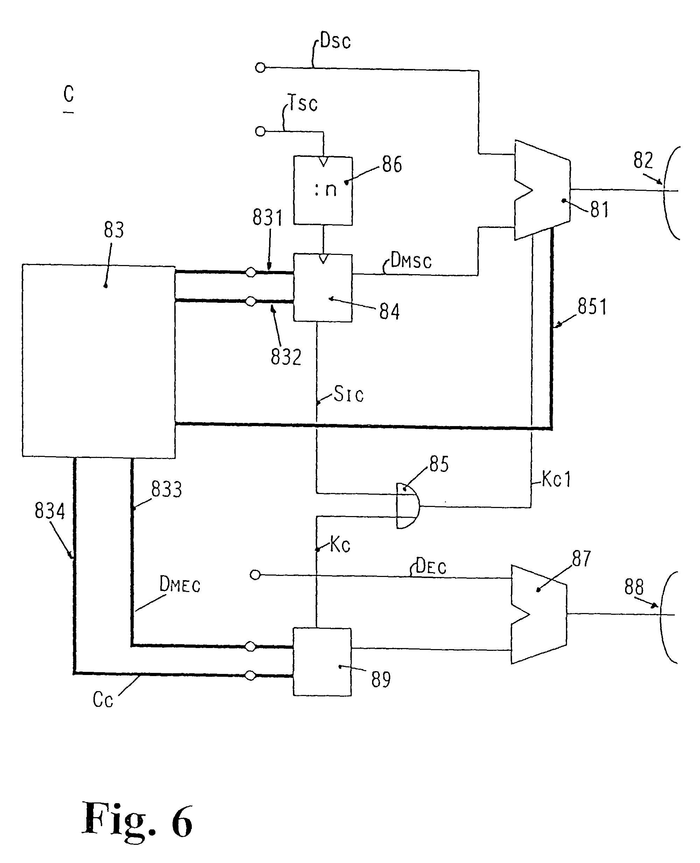

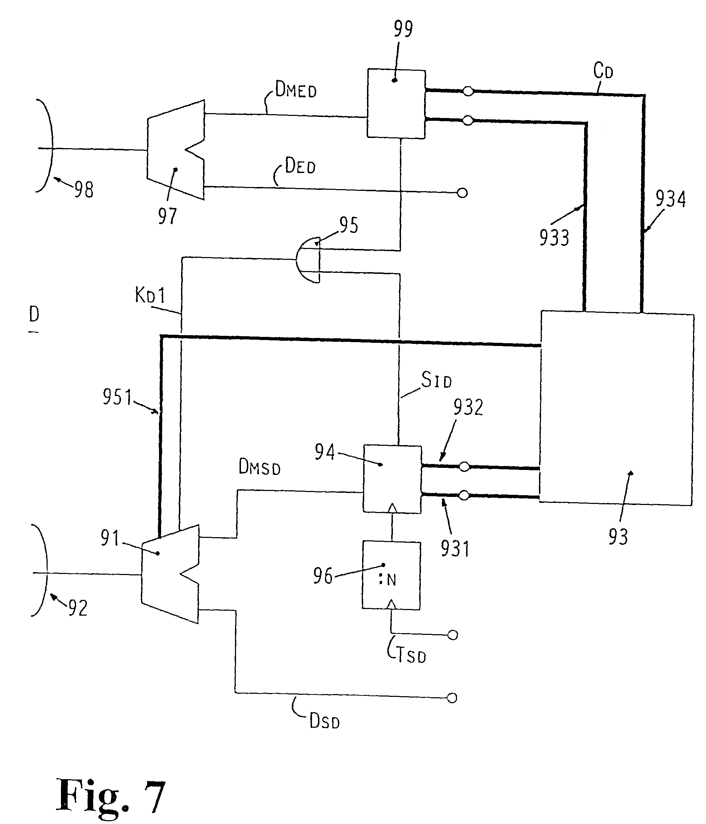

Das Verfahren zur Entfernungsmessung mittels eines multiplexierten Subkanals kann in einer weiteren Ausgestaltung der Erfindung beispielsweise mit Hilfe eines Terminals **C** nach **Fig. 6** und eines Gegenterminals **D** nach **Fig. 7** durchgeführt werden. Im Terminal **C** ist ein modifizierter Subkanal-Multiplexer 81 vorhanden, dessen Ausgangssignal einer Sendereinheit 82 zugeführt wird. Eingangsseitig kann der Subkanal-Multiplexer 81 beispielsweise mit mehreren, mit einer grossen Bitrate übertragenen, bereits für sich multiplexierten Nutzdatensignalen **Dsc** sowie mit einem Subkanal-Datensignal **Dmsc** beaufschlagt werden, das in einem Terminal-Kontroller 83 erzeugt und über einen Bus 831 sowie über einen Subkanal-Kontroller 84 geführt wird, der über einen weiteren Bus 832 für Range-Steuer-Signale ebenfalls an den Terminal-Kontroller 83 angeschlossen ist. Ein Coder im Terminal- Kontroller 83 initiiert den Messvorgang über den Bus 831 oder gegebenenfalls 832. Bei dessen Start erzeugt der Subkanal-Kontroller 84 das Steuersignal **Sic**, das dem ersten Eingang eines ODER-Tores 85 zugeführt wird. Ein Taktsignal **Tsc** grosser Bitrate wird über einen Teiler 86 dem Takteingang des Kontrollers 84 zugeführt. Im Terminal **C** ist auch ein Subkanal-Demultiplexer 87 vorhanden, der eingangsseitig an eine Empfängereinheit 88 angeschlossen ist, und der ausgebildet ist, um ausgangsseitig beispielsweise mehrere multiplexierte Nutzdatensignale **Dec** mit grosser Bitrate sowie ein Subkanal-Daten-Signal **Dmec** abzugeben, das über einen Subkanal-Diskriminator 89 und einen Bus 833 dem Terminal-Kontroller 83 zugeführt wird. Der Subkanal-Diskriminator 89 ist ausgebildet, um über einen Bus 834 ein Range-Steuer-Signal **Cc** für den Terminal-Kontroller 83 abzugeben. Zudem ist ein Ausgang des Diskriminators 89 mit dem zweiten Eingang des ODER-Tores 85 verbunden, dessen Ausgangssignal **Kc1** einem weiteren Eingang des modifizierten Multiplexers 81 zugeführt wird. In dieser Ausführung ist ein weiterer Bus 851 vorgesehen, an dessen Enden der Terminal-Kontroller 83 bzw. der Multiplexer 81 angeschlossen sind.

Im Gegenterminal **D** sind in ähnlicher Weise ein Subkanal-Multiplexer 91, eine Sendereinheit 92, ein Terminal-Kontroller 93, ein Subkanal-Kontroller 94, ein ODER-Tor 95, ein Teiler 96, ein Demultiplexer 97 und eine Sendereinheit 98 sowie fünf Busse 931, 932, 933, 934 und 951 vorhanden. Die Signale **Dmed, Ded, Cd, Kd, Sid, Tsd** und **Dsd** in **Fig. 7** haben eine ähnliche Funktion wie die entsprechenden Signale **Dmeb, Deb, Cb, Kb, Sib, Tsb** und **Dsb** in **Fig. 5**. Insbesondere ist jedoch der Ausgang des Subkanal-Kontrollers 94 mit dem einen Eingang und der Ausgang des Diskriminators 99 mit dem anderen Eingang des ODER-Tores 95 verbunden, das das Signal **Kd1** zur Steuerung des Multiplexers 91 liefert. Der Terminal-Kontroller 93 und der Multiplexer 91 sind durch den zusätzlichen Bus 951 miteinander verbunden.

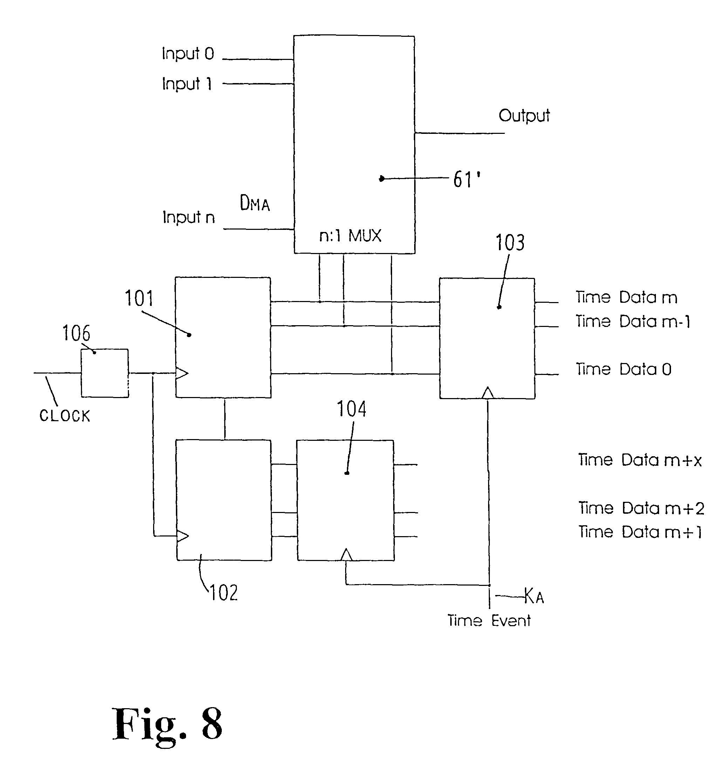

In Vergleich zum Multiplexer 61 nach **Fig. 4** kann der modifizierte Multiplexer 81 im Terminal **C** nach **Fig. 6** einen konventionellen Multiplexer 61', zwei Zähler **101,102** und zwei Zwischen-Speicherschaltungen **103, 104**, im weiteren kurz als Speicher **103, 104** bezeichnet nach **Fig. 8** umfassen, die auch Verriegelungsschaltungen (Latches) genannt werden. Dabei werden die Takteingänge der Zähler **101** und **102** gemeinsam mit dem Ausgangssignal beispielsweise eines PLL-Vervielfachers **106**, der vorzugsweise einen Multiplizierfaktor **n + 1** aufweist und mit dem schnellen Taktsignal (clock) des Multiplexers beaufschlagt wird. Selbstverständlich arbeiten die anderen Multiplexer und Demultiplexer mit einem weiteren sonst in den anderen Figuren nicht dargestellten Takt (clock). In dieser Ausführung (**Fig. 8**) weist der Multiplexer **61'** eine Anzahl **m + 1** Eingänge für die **ld(m + 1)** Bits des Ausgangs-Signals des Zählers **101** auf, mit denen auch die Schaltung **103** beaufschlagt wird (**ld** = Logarithmus zur Basis 2). Die Ausgänge der Schaltung **103** geben die entsprechenden Bits der Range-Daten-Signale ab, die über den Bus **851** übertragen und dem Terminal-Kontroller **83** zugeführt werden (vgl. **Fig. 6**).

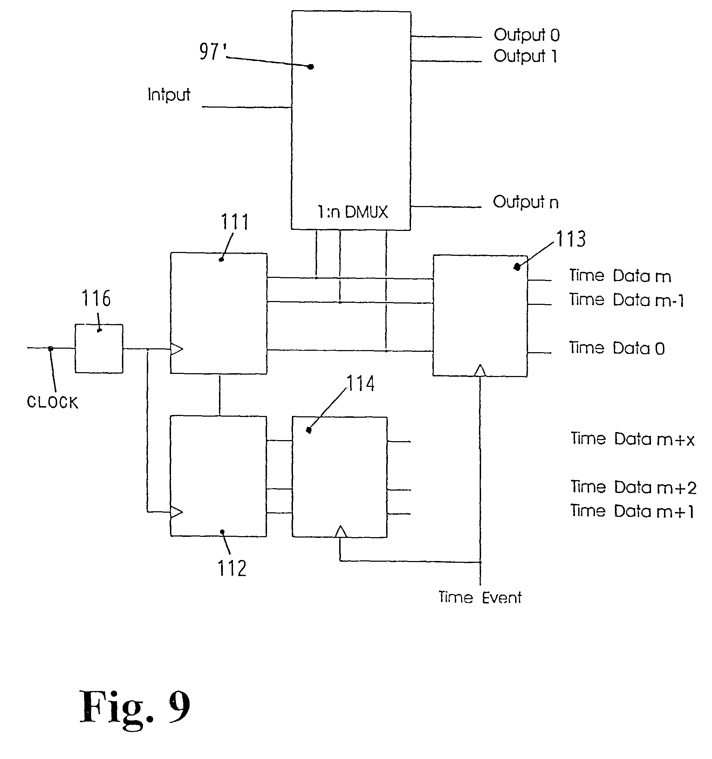

In Vergleich zum Demultiplexer **77** nach **Fig. 5** kann der modifizierte Demultiplexer **97** im Terminal **D** nach **Fig. 7** einen konventionellen Multiplexer **97'**, zwei Zähler **111, 112** und zwei Speicher (Latches) **113**, **114** nach **Fig. 9** umfassen. Dabei werden die Takteingänge der Zähler **111** und **112** gemeinsam mit dem Ausgangssignal beispielsweise eines PLL-Vervielfachers **116**, der vorzugsweise einen Multiplizierfaktor **n + 1** aufweist, mit dem schnellen Taktsignal (Clock) des Demultiplexers beaufschlagt. In dieser Ausführung weist der Demultiplexer **97'** eine Anzahl **m + 1** Eingänge für die **ld(m + 1)** Bits des Ausgangs-Signals des Zählers **111** auf, mit denen auch die Schaltung **113** beaufschlagt wird. Die **m + 1** Ausgänge der Schaltung **113** geben die entsprechenden Bits der Range-Daten-Signale ab, die über den Bus **951** übertragen und dem Terminal-Kontroller **93** zugeführt werden (vgl. **Fig. 7**).

Die Elemente **102, 104** und **112, 114** dienen für den Fall, dass die Range-Daten-Signale mehr als **ld(m + 1)** Bits benötigen. Die Zähler **101 (Fig. 8)** und **111 (Fig. 9)** sorgen für eine Zeitprägung auf der Ebene der nacheinanderfolgenden Subkanal-Rahmen (frames). Diese Zähler werden jedoch nur bei niedrigen Taktraten des Subkanals betrieben, so dass im Prinzip sogar eine Realisierung in der Software des Terminal-Kontrollers möglich ist.

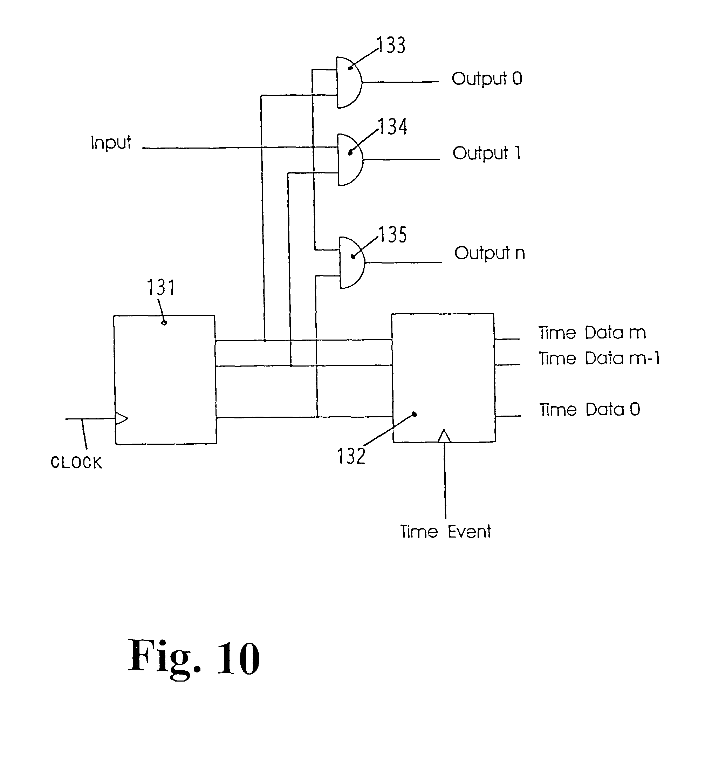

Dieses modifizierte Verfahren benützt anstelle separater Zähler (**65** bzw. **75** in **Fig. 4** und **5**) Teile der Serien-Parallel-Wandler (S-P) bzw. Parallel-Serien-Wandler (P-S), die beispielsweise im Subkanal-Multiplexer bzw. im Demultiplexer ohnehin bereits vorhanden sind. Insbesondere können auch S-P- und/oder P-S-Wandler wie Subkanal-Multiplexer und/oder Demultiplexer gemäss der dargestellten Erweiterungen als Ersatz für die separaten Zähler verwendet werden. Diese Erweiterungen bestehen grundsätzlich aus einfachen Zwischenspeichern, die den internen Zustand des Multiplexers bzw. Demultiplexers während eines beliebigen Zeitpunktes festhalten. Auf der anderen Seite stellt der innere Zustand des als S-P- bzw. P-S-Wandler arbeitenden Zählers **101** bzw. **111** eine Art von Uhrzeit dar. Insbesondere bei Rahmenlängen von **2, 4, 8, 16**, ... Bits können die Adress-Signale, die am Multiplexer bzw. Demultiplexer liegen, direkt als eine binär dargestellte Zeitgrösse interpretiert werden. Aber auch bei Rahmenlängen, die nicht einer Zweierpotenz entsprechen, können mit Hilfe der Steuersignale Zeitpunkte eindeutig bestimmt werden, wie in **Fig. 10** schematisch dargestellt. Diese Schaltung umfasst beispielsweisse ein Schieberegister **131,** Speicher (Latch) **132** und mehrere Tore **133,134,135**, ... Dann ist jedoch das Messergebnis nicht in einer Zweierpotenz gegeben; im Terminal-Kontroller kann jedoch eine einfache Umcodierung vorgenommen werden, um auf eine übliche Zahlendarstellung zu kommen.

Die Entfernungsmessung mit den Vorrichtungen nach **Fig. 6** und **7** gemäss der modifizierten Subkanalmethode wird wie folgt durchgeführt:

Der Initiator der Messung ist der das Signal **Sic** liefernde Terminal-Kontroller **83** des Terminals **C** (**Fig. 6**), während das Gegenterminal **D** nur auf ein entsprechendes Subkanal-Steuersignal reagiert.

Nachdem der Subkanal-Kontroller **84** eine Aufforderung zur Entfernungsmessung bekommen hat, wird eine im Terminal-Kontroller **83** erzeugte Signatur "Range-Abfrage", das heisst das Signal **Dmsc** über den Multiplexer **81** (**Fig. 6**) und die Sendereinheit **82** zum Gegenterminal **D** gesendet.

Dabei wird beim Aussenden der Signatur die Terminalzeit mit der hohen Auflösung des schnellen Datentaktes in der Verriegelungsschaltung **103** und gegebenenfalls auch **104** zwischengespeichert und anschliessend über den Bus **851** in den Terminal-Kontroller **83** übertragen, was einem Zeitpunkt **t1** entspricht.

Im Demultiplexer **97** des Gegenterminals **D** (**Fig. 7**) werden die Signale **Dmed** und **Ded** getrennt. Die multiplexierten Signale **Ded** enthalten dieselbe Information der Signale **Dsc**, kommen aber mit einer Zeitverzögerung, entsprechendes gilt für die Signale **Dmed** und **Dmsc.** Im Subkanal-Diskriminator **99** wird das Signal **Dmed**, das heisst die Signatur "Range-Abfrage", geprüft. Beim Erkennen der Signatur wird nun auch die Terminalzeit des Terminals **D** ermittelt, was einem Zeitpunkt **t2** entspricht.

Zudem wird beispielsweise durch einen Steuerrechner oder durch den Terminal-Kontroller **93** dieses Gegenterminals **D** das Senden einer Antwort dadurch initiiert, dass ein entsprechendes Befehlsignal **Sid** an den Subkanal-Kontroller **94** gegeben wird.

Der Subkanal-Kontroller **94** sendet nun eine Signatur "Range-Antwort", das heisst ein Signal Dmsd, über den Subkanal-Multiplexer **91 (Fig. 7)** an das Terminal **C** zurück, wobei beim Aussenden dieses Signals Dmsd nun auch mit Hilfe eines schnellen Zwischenspeichers, beispielsweise **103, 104** in **Fig. 8,** der Zeitpunkt des Aussendens der Antwort ermittelt wird, was dem Zeitpunkt **t3** entspricht.

Im Terminal **C** wird die Terminalzeit **t4** des Empfangs der Signatur "Range-Antwort", das heisst des Signals **Dmec** ermittelt. Zudem werden die Messwerte für die Zeiten **t2** und **t3** durch den Subkanal vom Terminal **D** zum

EP 0 834 749 B1

Terminal-Kontroller **83 (Fig. 6)** übertragen; dabei wird das Signal **Kc** über das ODER-Tor **85** den Verriegelungsschaltungen **103** und **104** zugeführt, so dass der Terminal-Kontroller **83** den Zeitpunkt t4 ermitteln kann.

Schliesslich führt der Terminal-Kontroller **83** die Berechnung der Entfernung gemäss folgender Formel durch:

$$L = c.((t4 - t1) - (t3 - t2))/2 - Ko$$

durch, worin **t4 - t1** der gesamten Laufzeit und **t3 - t2** der Verarbeitungszeit auf der Seite des Gegenterminals **D** entspricht.

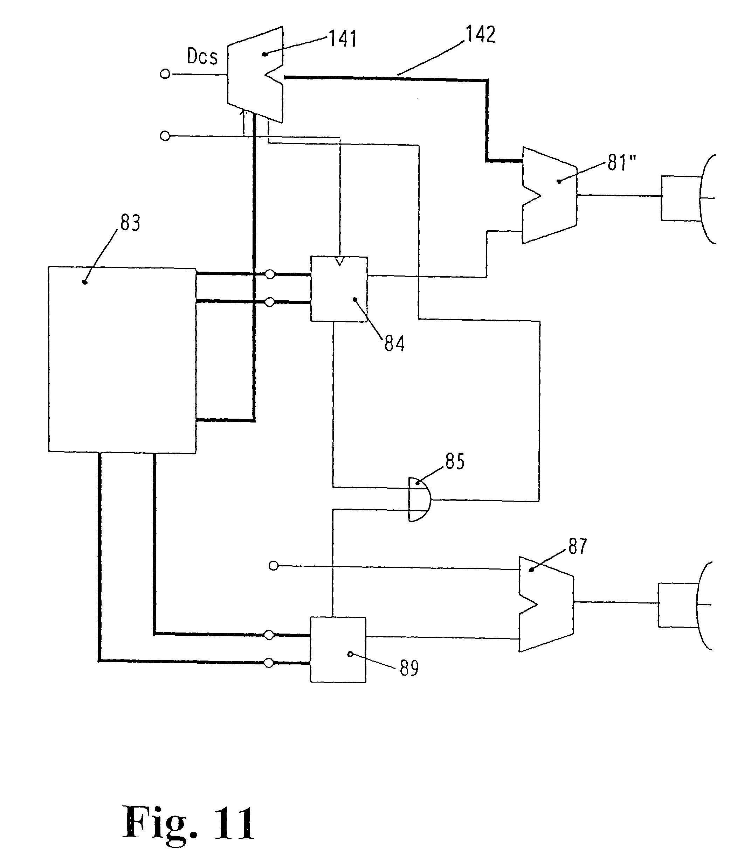

Im Unterschied zum Terminal **C** nach **Fig. 6** umfasst eine Variante der Station nach **Fig. 11** einen zusätzlichen modifizierten Demultiplexer **141**, der eingangsseitig mit den erwähnten mit einer grossen Bitrate übertragenen, bereits multiplexierten Nutzdatensignalen **Dcs** beaufschlagt und ausgangsseitig über einen Bus **142** an einen einfachen Subkanal-Multiple-xer **81"** angeschlossen ist. Die Elemente **83, 84, 85, 87** und **89** mit entsprechenden Bussen und Leitungen in beiden Figuren **6** und **11** sind sonst an sich äquivalent. Der Ausgang des ODER-Tores **85** ist jedoch mit dem Steuereingang des modifizierten Demultiplexers **141** verbunden, und der Subkanal-Kontroller **84** wird mit demselben Takt **Tsc** wie der Demultiplexer **141** beaufschlagt. Die Multiplexer und/oder Demultiplexer können vorzugsweise mit Takt und Rahmen Rückgewinnung (frame recovery) sein. In den Figuren **4** bis **7** sind die Sendereinheiten **62**, ... und Empfängereinheiten **68,**... nur schematisch dargestellt. Die Vorrichtungen nach **Fig. 3** bis **7** sind im Prinzip symmetrisch und gegebenenfalls austauschbar. Sie können daher als sendeseitige und/oder empfängerseitige Teile verwendet werden.

## Patentansprüche

1. Verfahren zur Entfernungsmessung zwischen über einen optischen Kommunikationskanal verbundenen und Nutzdaten sendenden und empfangenden Stationen **(1, 2)**, insbesondere zwischen zwei Satelliten im Weltraum, wobei

   - die Entfernung durch Ermittlung der Laufzeit eines Signals ($T_R$) zwischen den Stationen **(1**, **2)** ermittelt und diese Laufzeit des Signals ($T_R$) mit der Lichtgeschwindgkeit ($c$) multipliziert wird,
   - die Laufzeit des Signals ($T_R$) durch die Ermittlung der gesamten Umlaufzeit ($T_{Umlauf}$), sowie der Prozesszeiten ($T_1, T_2$) in den beiden Stationen **(1, 2)** erfolgt, wobei zur Ermittlung der Laufzeit des Signals ($T_R$) die Prozesszeiten ($T_1$) und ($T_2$) von der gesamten Umlaufzeit ($T_{Umlauf}$) subtrahiert werden, und
   - die Entfernung zwischen den zwei Stationen **(1, 2)** durch die Messung der gesamten Umlaufzeit ($T_{Umlauf}$), in Form einer Entfernungsabfrage **(3)** und einer entsprechenden Antwort **(4)** ermittelt wird,

   **dadurch gekennzeichnet,dass**

   - zur Einstellung der Phase eines Empfangslasers auf die Phase eines Sendelasers Synchronisationsbit übertragen werden, und
   - ein Teil dieser Synchronisationsbits zur Bildung eines Zusatzkanals zur Uebertragung der Entfernungsabfrage **(3)** und der entsprechenden Antwort **(4)** benutzt wird.

2. Verfahren nach Anspruch **1**,
   **dadurch gekennzeichnet,dass**
   die Antwort der zweiten Station eine Informationsmeldung über die Prozesszeit ($T_2$) dieser zweiten Station umfasst.

3. Verfahren nach Anspruch **1** oder **2**,
   **dadurch gekennzeichnet,**
   dass die Entfernungsabfrage und die entsprechende Antwort über einen Zusatzkanal des Kommunikationskanals erfolgen.

4. Verfahren nach Anspruch **1** oder **2**,
   **dadurch gekennzeichnet,**
   dass die Entfernungsabfrage **(3, 24)** und die entsprechende Antwort **(4, 23)** durch Syncbit-Verletzungen übermittelt werden.

5. Verfahren nach mindestens einem der obigen Ansprüche,
   **dadurch gekennzeichnet,**

dass in der ersten Station **(A)**:

als Initiator der Messung ein ein Initiator-Signal **(Sia)** liefernder Terminal-Kontroller **(63)** der verwendet wird,
wobei nachdem ein Subkanal-Kontroller **(64)** eine Aufforderung zur Entfernungsmessung bekommen hat, eine im Terminal-Kontroller **(63)** erzeugte Range-Abfrage-Signatur **(Dmsa)** über den Subkanal-Kontroller **(64)**, einen Subkanal-Multiplexer **(61)** und eine Sendereinheit **(62)** zur zweiten Station **(B)** gesendet wird, wobei beim Aussenden dieses Range-Abfrage-Signals **(Dmsa)** mit Hilfe des Initiator-Signals **(Sia)** ein Zählprozess in einem Subkanal-Zähler **(65)** gestartet wird, um einen ersten Zählwert $n1$ zu ermitteln,

dass in der zweiten Station **(B)**:

im einem Demultiplexer **(77)** das empfangene Range-Abfrage-Signal **(Dmeb)** selektiert und in einem Subkanal-Diskriminator **(79)** geprüft wird, der beim Erkennen dieser Signatur ein Start-Signal **(Kb)** erzeugt, das einen Zähler **(75)** startet, um einen zweiten Zählwert $n2$ zu ermitteln,
wobei dann der Subkanal-Kontroller **(74)** ein Range-Antwort-Signatur-Signal **(Dmsb)** über einen Subkanal-Multiplexer **(71)** und eine Sendereinheit **(72)** an die erste Station **(A)** sendet, wobei beim Aussenden dieses Range-Antwort-Signatur-Signals **(Dmsb)** dieser Zähler **(75)** durch ein Stopp-Signal **(Sib)** gestoppt wird,
wobei zugleich die Information über den letzten Zählerstand $n2$ über einen Bus **(751)** und den Subkanal-Multiplexer **(71)** zur ersten Station **(A)** gesendet wird,

dass ferner wieder in der ersten Station **(A)**:

beim Empfang des Range-Antwort-Signatur-Signals **(Dmea)** der Zähler **(65)** durch ein Stopp-Signal **(Ka)** gestoppt wird, wobei der Stand $n1$ dieses Zählers **(65)** sodann über einen Bus **(651)** zum Terminal-Kontroller **(63)** übertragen wird, der die Berechnung der Entfernung gemäss folgender Formel

$$L = c.(n1.Tsa - n2.Tsb)/2 - Ko$$

durchführt, worin **c** die Lichtgeschwindigkeit und **Ko** eine Korrekturkonstante ist, und wobei **Tsa** und **Tsb** die Takte des ersten Zählers **(65)** bzw. des zweiten Zählers **(75)** sind.

6. Verfahren nach mindestens einem der obigen Ansprüche,
**dadurch gekennzeichnet,**

dass in der ersten Station **(C)**:

als Initiator der Messung ein ein Initiator-Signal **(Sic)** liefernder Terminal-Kontroller **(83)** verwendet wird,
wobei nachdem ein Subkanal-Kontroller **(84)** eine Aufforderung zur Entfernungsmessung bekommen hat, ein im Terminal-Kontroller **(83)** erzeugtes Range-Abfrage-Signatur-Signal **(Dmsc)** über einen Multiplexer **(81; 81")** und eine Sendereinheit **(82)** zur zweiten Station **(D)** gesendet wird,
wobei beim Aussenden dieses Range-Abfrage-Signatur-Signals **(Dmsc)** eine Terminalzeit in einem Speicher **(103, 104)** zwischengespeichert und anschliessend über einen Bus **(851)** in den Terminal-Kontroller **(83)** übertragen wird, was einem Zeitpunkt **t1** entspricht,

dass in der zweiten Station **(D)**:

in einem Demultiplexer **(97)** das empfangene Range-Abfrage-Signatur-Signal **(Dmed)** selektiert und in einem Subkanal-Diskriminator **(99)** geprüft wird, der beim Erkennen der Abfrage-Signatur die Terminalzeit der zweiten Station **(D)** ermittelt, was einem Zeitpunkt **t2** entspricht,
wobei das Senden einer Antwort dadurch initiiert wird, dass ein Befehlsignal **(Sid)** über einen Subkanal-Kontroller **(94)** gegeben wird, der ein Range-Antwort-Signatur-Signal **(Dmsd)** über den Subkanal-Multiplexer **(91)** an die erste Station **(C)** zurücksendet,
wobei beim Aussenden dieses Signals **(Dmsd)** mit Hilfe des Speichers **(103, 104)** der Zeitpunkt des Aussendens der Antwort ermittelt wird, was dem Zeitpunkt **t3** entspricht,

dass ferner wieder in der ersten Station **(C)**:

die Terminalzeit **t4** des Empfangs des Range-Antwort-Signatur-Signals **(Dmec)** ermittelt wird,
wobei ein Stopp-Signal **(Kc)** über ein ODER-Tor **(85)** dem Speicher **(103, 104)** zugeführt wird, und die Messwerte für die Zeiten **t2** und **t3** durch den Subkanal von der zweiten Station **(D)** zum Terminal-Kontroller **(83)** übertragen werden,
wobei der Terminal-Kontroller **(83)** den Zeitpunkt **t4** ermittelt, der die Berechnung der Entfernung gemäss folgender allgemein bekannter Formel

$$L = c.((t4 - t1) - (t3 - t2))/2 - Ko$$

durchführt, worin **t4 - t1** der gesamten Laufzeit und **t3 - t2** der Verarbeitungszeit auf der Seite der zweiten Station **D** entspricht.

7. Vorrichtung zur Entfernungsmessung zwischen über einen optischen Kommunikationskanal verbundenen und Kommunikationsdaten sendenden und empfangenden Stationen **(1, 2)**, insbesondere zwischen zwei Satelliten im Weltraum,

- mit Zählern zur Bestimmung der Laufzeit eines Signals ($T_R$) zwischen den Stationen **(1, 2)** und einem Terminal-Kontroller (73,83,93) mit einer Recheneinheit zur Multiplikation dieser Laufzeit des Signals ($T_R$) mit der Lichtgeschwindigkeit ($c$), wobei
- die genannten Zähler zur Bestimmung der Laufzeit des Signals ($T_R$) Zähler zur Bestimmung der gesamten Umlaufzeit ($T_{Umlauf}$) sowie der Prozesszeiten ($T_1$) und ($T_2$) in den beiden Stationen **(1, 2)**, sowie eine weitere Recheneinheit des Terminal-Kontrollers (73,83,93) zur Ermittlung der Laufzeit des Signals ($T_R$) durch Subtraktion der Prozesszeiten ($T_1$) und ($T_2$) von der gesamten Umlaufzeit ($T_{Umlauf}$), umfassen und
- dass ein Abfrage- und Antwortkanal zur Übermittlung einer Abfrage von der ersten zur zweiten Station und zur Übermittlung einer Antwort von der zweiten zur ersten Station vorgesehen ist,

**dadurch gekennzeichnet, dass**

- zur Einstellung der Phase eines Sendelasers auf die Phase eines Empfangslasers ein Multiplexer zur Übertragung von Synchronisationsbits vorgesehen ist, und dass
- ein Teil dieser Synchronisationsbits einen Zusatzkanal für den Abfrage- und Antwortkanal bildet.

8. Vorrichtung nach Patentanspruch **7**,
**dadurch gekennzeichnet, dass**
die erste und/oder die zweite Station Sende- und Empfangsmittel aufweist, die von einer Zusatzkanal-Verarbeitungs-Einheit **(10; 40** bzw. **61, 66; 67, 69)** gebildet werden, denen eine Entfernungs-Messvorrichtung **(11** bzw. **64, 65)** zugeordnet ist, die einen Zähler (65) und/oder Speicher **(103, 104; 113, 114)** umfasst, die durch ein bei einer Entfernungsabfrage der initialisierenden Station **(A)** erzeugtes Startsignal **(28** bzw. **Sia** bzw. **Sic)** und durch ein beim Empfang eines von der zweiten Station gesendeten Antwortsignals gebildetes Steuer-Signal **(23** bzw. **Ka** bzw. **Kc)** betätigt wird.

9. Vorrichtung nach Patentanspruch **7**,
**dadurch gekennzeichnet, dass**
die erste und/oder die zweite Station Subkanal-Multiplexer und -Demultiplexer aufweist, die einen Subkanal-Diskriminator umfassen, zur Übermittlung der Entfernungsabfrage und der entsprechende Antwort mit Hilfe von Syncbit-Verletzungen der übermittelten Nutzdaten auf dem Kommunikationsdatenkanal.

10. Vorrichtung nach mindestens einem der Ansprüche **7** bis **9**,
**dadurch gekennzeichnet, dass**
die erste und/oder die zweite Station einen Terminal-Kontroller **(63; 83** bzw. **73; 93)** aufweist der über mindestens einem Bus an einen Subkanal-Kontroller **(64; 84** bzw. **74; 94)** und über mindestens einen weiteren Bus an einen Subkanal-Diskriminator **(69; 89** bzw. **79; 99)** angeschlossen sind, und dass der Zähler **(65** bzw. **75)** oder Speicher durch einen Range-Daten-Bus **(651; 851** bzw. **751; 951)** an den Terminal-Kontroller **(63; 83** bzw. **73; 93)** angeschlossen ist.

11. Vorrichtung nach Anspruch **10**,
**dadurch gekennzeichnet,dass**
der Range-Daten-Bus **(651** bzw. **751)** an einen den Terminal-Kontroller **(63** bzw. **73)** mit dem Subkanal-Kontroller **(64** bzw. **74)** verbindenden Bus **(631** bzw. **731)** angeschlossen ist, über den der Anschluss zwischen dem Zähler **(65** bzw. **75)** und dem Terminal-Kontroller **(63** bzw. **73)** bewirkt wird.

12. Vorrichtung nach Anspruch **10**,
**dadurch gekennzeichnet,dass**
der Terminal-Kontroller **(83** bzw. **93)** direkt durch den Range-Daten-Bus **(851** bzw. **951)** mit den sich in einem Multiplexer **(81** bzw. **91)** oder in einem Demultiplexer **(141)** befindenden Speicher **(103, 104** bzw. **113, 114)** verbunden ist.

13. Vorrichtung nach einem der Ansprüche **7** bis **12**,
**dadurch gekennzeichnet,dass**
die erste und/oder die zweite Station Sende- und Empfangsmittel aufweist, die von einer Zusatzkanal-Verarbeitungs-Einheit **(10, 40)** gebildet werden, die wenigstens einen Multiplexer (17) beziehungsweise einen Demultiplexer **(46)** aufweist, mit der sich die Entfernungsabfrage und die Antwort in Subkanalbits und/oder in Syncbit-Verletzungen umsetzen lassen.

## Claims

1. Method for distance measurement between stations (1, 2) linked via an optical communication channel and transmitting and receiving useful data, more particularly between two satellites in space, where

   - the distance is established by ascertaining the transit time of a signal $(T_R)$ between the stations (1, 2) and this transit time of the signal $(T_R)$ is multipled by the speed of light (*c*),
   - the transit time of the signal $(T_R)$ is obtained by ascertaining the overall round-trip time $(T_{round})$, and the process times $(T_1, T_2)$ in the two stations (1, 2), subtracting the process times $(T_1)$ and $(T_2)$ from the overall round-trip time $(T_{round})$ to ascertain the transit time of the signal $(T_R)$, and
   - the distance between the two stations (1, 2) is established by measuring the overall round-trip time $(T_{round})$, in the form of a distance interrogation (3) and a corresponding response (4),

   **characterised in that**

   - synchronisation bits are transmitted in order to adjust the phase of a receiving laser to the phase of a transmitting laser, and
   - some of these synchronisation bits are used to form an auxiliary channel for transmitting the distance interrogation (3) and the corresponding response (4).

2. Method according to claim 1,
**characterised in that**
the response from the second station includes a message about the process time $(T_2)$ of this second station.

3. Method according to claim 1 or 2,
**characterised in that**
the distance interrogation and the corresponding response take place via an auxiliary channel of the communication channel.

4. Method according to claim 1 or 2,
**characterised in that**
the distance interrogation (3, 24) and the corresponding response (4, 23) are transferred using syncbit violations.

5. Method according to at least one of the preceding claims,
**characterised in that**

   in the first station (A):

a terminal controller (63) supplying an initiator signal (Sia) is used as the measurement initiator,
after a sub-channel controller (64) has received a distance measurement request, a range interrogation signature (Dmsa) generated in the terminal controller (63) being transmitted to the second station (B) via the sub-channel controller (64), a sub-channel multiplexer (61) and a transmitter unit (62),
and upon transmission of this range interrogation signal (Dmsa), the initiator signal (Sia) being used to start a counting process in a sub-channel counter (65) in order to ascertain a first counted measurand n1,

that in the second station (B):

the received range interrogation signal (Dmeb) is selected in a demultiplexer (77) and verified in a sub-channel discriminator (79), which upon recognition of this signature generates a start signal (Kb) which starts a counter (75) in order to ascertain a second counted measurand n2,
the sub-channel controller (74) then transmitting a range response signature signal (Dmsb) to the first station (A) via a sub-channel multiplier (71) and a transmitter unit (72), this counter (75) being stopped by a stop signal (Sib) upon transmission of this range response signature signal (Dmsb),
and at the same time the information about the latest counter status n2 being transmitted to the first station (A) via a bus (751) and the sub-channel multiplexer (71),

also that once again in the first station (A):

upon receipt of the range response signature signal (Dmea) the counter (65) is stopped by a stop signal (Ka), the status nl of this counter (65) then being transmitted via a bus (651) to the terminal controller (63), which performs the computation of the distance in accordance with the following formula

$$L = c.(n1.Tsa - n2.Tsb)/2 - Ko$$

wherein c is the speed of light and Ko a correction constant, and where Tsa and Tsb are the timing signals respectively of the first counter (65) and second counter (75).

6. Method according to at least one of the preceding claims,
**characterised in that**

in the first station (C):

a terminal controller (83) supplying an initiator signal (Sic) is used as the measurement initiator,
after a sub-channel controller (84) has received a distance measurement request, a range interrogation signature signal (Dmsc) generated in the terminal controller (83) being transmitted to the second station (D) via a multiplexer (81; 81") and a transmitter unit (82),
and upon transmission of this range interrogation signature signal (Dmsc) a terminal time being temporarily stored in a memory (103, 104) and subsequently transmitted via a bus (851) to the terminal controller (83), corresponding to an instant tl,

that in the second station (D):

the received range interrogation signature signal (Dmed) is selected in a demultiplexer (97) and verified in a sub-channel discriminator (99) which upon recognition of the interrogation signature ascertains the terminal time of the second station (D), corresponding to an instant t2,
the transmission of a response being initiated by the fact that a control signal (Sid) is passed via a sub-channel controller (94) which sends back a range response signature signal (Dmsd) to the first station (C) via the sub-channel multiplexer (91),
upon transmission of this signal (Dmsd) the memory (103, 104) being used to ascertain the instant of transmission of the response, corresponding to instant t3,

also that once again in the first station (C):

the terminal time t4 of the receipt of the range response signature signal (Dmec) is ascertained,
a stop signal (Kc) being sent via an OR gate (85) to the memory (103, 104), and the measured values for the instants t2 and t3 being transmitted by the sub-channel from the second station (D) to the terminal controller (83),
the terminal controller (83) ascertaining the instant t4 which computes the distance in accordance with the following generally known formula

$$L = c.((t4 - t1) - (t3 - t2)/2 - Ko$$

wherein t4 - t1 corresponds to the overall transit time and t3 - t2 to the processing time on the part of the second station D.

7. Apparatus for distance measurement between stations (1, 2) linked via an optical communication channel and transmitting and receiving communication data, more particularly between two satellites in space,

- with counters for determining the transit time of a signal ($T_R$) between the stations (1, 2) and with a terminal controller (73, 83, 93) having a processor for multiplying this transit time of the signal ($T_R$) by the speed of light (c),
- the said counters for determining the transit time of the signal ($T_R$) including counters for determining the overall round-trip time ($T_{round}$) and the process times ($T_1$) and ($T_2$) in the two stations (1, 2), as well as an additional processor of the terminal controller (73, 83, 93) for determining the transit time of the signal ($T_R$) by subtracting the process times $(T_1)$ and $(T_2)$ from the overall transit time ($T_{round}$) and
- that an interrogation and response channel is provided for communicating an interrogation from the first to the second station and for communicating a response from the second to the first station,

**characterised in that**

- to adjust the phase of a transmitting laser to the phase of a receiving laser, a multiplexer is provided for transmitting synchronisation bits, and that
- some of these synchronisation bits form an auxiliary channel for the interrogation and response channel.

8. Apparatus according to claim 7,
**characterised in that**
the first and/or the second station has transmit and receive means which are constituted by an auxiliary channel processing unit (10;40 and 61,66;67,69 respectively), associated with which is a distance measuring device (11 and 64, 65 respectively) which includes a counter (65) and/or memory (103,104; 113,114), which is actuated by a start signal (28 and Sia and Sic respectively) generated upon a distance interrogation of the initialising station (A) and by a control signal (23 and Ka and Kc respectively) formed upon receipt of a response signal transmitted by the second station.

9. Apparatus according to claim 7,
**characterised in that**
the first and/or the second station has sub-channel multiplexers and sub-channel demultiplexers which include a sub-channel discriminator, for transferring the distance interrogation and the corresponding response on the communication data channel with the help of syncbit violations of the useful data transferred.

10. Apparatus according to at least one of claims 7 to 9,
**characterised in that**
the first and/or the second station has a terminal controller (63;83 and 73;93 respectively) which are linked via at least one bus to a sub-channel controller (64;84 and 74;94 respectively) and via at least one additional bus to a sub-channel discriminator (69;89 and 79;99 respectively), and that the counter (65 and 75 respectively) or memory is linked by a range data bus (651;851 and 751;951 respectively) to the terminal controller (63;83 and 73;93 respectively).

11. Apparatus according to claim 10,
**characterised in that**
the range data bus (651 and 751 respectively) is linked to a bus (631 and 731 respectively) which connects the terminal controller (63 and 73 respectively) to the sub-channel controller (64 and 74 respectively), via which bus (631 and 731 respectively) the connection between the counter (65 and 75 respectively) and the terminal controller (63 and 73 respectively) is accomplished.

12. Apparatus according to claim 10,
    **characterised in that**
    the terminal controller (83 and 93 respectively) is connected directly by the range data bus (851 and 951 respectively) to the memories (103, 104 and 113, 114 respectively) located in a multiplexer (81 and 91 respectively) or in a demultiplexer (141).

13. Apparatus according to any of claims 7 to 12,
    **characterised in that**
    the first and/or the second station has transmit and receive means which are constituted by an auxiliary channel processing unit (10, 40) which incorporates at least one multiplexer (17) or demultiplexer (46), as the case may be, by which the distance interrogation and the response can be converted into sub-channel bits and/or into syncbit violations.

## Revendications

1. Procédé de mesure de distance entre des stations (1, 2) reliées par une voie optique de communication et envoyant et recevant des données utiles, en particulier deux satellites dans l'espace, dans lequel

   - la distance est obtenue par la détermination du temps de propagation ($T_R$) d'un signal entre les stations (1, 2) et ce temps de propagation ($T_R$) du signal est multiplié par la vitesse de la lumière (c),
   - la distance entre les deux stations (1, 2) est obtenue en mesurant le temps global ($T_{Umlauf}$) de propagation sous la forme d'une interrogation (3) de distance et d'une réponse (4) correspondante,

     caractérisé en ce que

   - pour régler la phase d'un laser de réception sur la phase d'un laser d'émission, des bits de synchronisation sont transmis, et
   - une partie de ces bits de synchronisation est utilisée pour former une voie supplémentaire pour transmettre l'interrogation (3) de distance et la réponse (4) correspondante.

2. Procédé selon la revendication 1,
   caractérisé en ce que
   la réponse de la deuxième station comprend une transmission d'informations sur le temps ($T_2$) de traitement de cette deuxième station.

3. Procédé selon la revendication 1 ou 2,
   caractérisé en ce que
   l'interrogation de distance et la réponse correspondante ont lieu sur une voie supplémentaire de la voie de communication.

4. Procédé selon la revendication 1 ou 2,
   caractérisé en ce que
   l'interrogation (3, 24) de distance et la réponse (4, 23) correspondante sont obtenues par des altérations de bits de synchronisation.

5. Procédé selon au moins l'une quelconque des revendications précédentes,
   caractérisé en ce que

   dans la première station (A) :

     comme initiateur de la mesure, un dispositif (63) de commande de terminal délivrant un signal (Sia) d'initiateur est utilisé,
     alors, après qu'un dispositif (64) de commande de sous-voie a reçu une invitation à une mesure de distance, une signature (Dmsa) d'interrogation de distance produite dans un dispositif (63) de commande de terminal est envoyée par l'intermédiaire du dispositif (64) de commande de sous-voie, d'un multiplexeur (61) de sous-voie et d'un module (62) d'émission, vers la deuxième station (B),
alors, lors de l'émission de ce signal (Dmsa) d'interrogation de distance au moyen du signal (Sia) d'initiateur, un processus de comptage est déclenché dans un compteur (65) de sous-voie pour obtenir une première valeur n1 de comptage,

dans la deuxième station (B) :

dans un démultiplexeur (77), le signal (Dmeb) reçu d'interrogation de distance est sélectionné et vérifié dans un discriminateur (79) de sous-voie qui, lors d'une reconnaissance de cette signature, produit un signal (Kb) de début qui déclenche un compteur (75) pour obtenir une deuxième valeur n2 de comptage,
alors, le dispositif (74) de commande de sous-voie envoie à la première station (A) un signal (Dmsb) de signature de réponse de distance par l'intermédiaire d'un multiplexeur (71) de sous-voie et d'un module (72) d'émission,
alors lors de l'émission de ce signal (Dmsb) de signature de réponse de distance, ce compteur (75) est arrêté par un signal (Sib) d'arrêt,
alors, en même temps les informations relatives à la dernière position n2 du compteur sont envoyées, par l'intermédiaire d'un bus (751) et du multiplexeur (71) de sous-voie, à la première station (A),

en outre dans la première station (A) :

lors de la réception du signal (Dmea) de signature de réponse de distance, le compteur (65) est arrêté par un signal (Ka) d'arrêt, et ainsi le position n1 de ce compteur (65) est alors envoyée par l'intermédiaire d'un bus (651) au dispositif (63) de commande de terminal qui effectue le calcul de la distance selon la formule suivante

$$L = c(n1.Tsa - n2Tsb)/2 - Ko$$

où c est la vitesse de la lumière et Ko une constante de correction, et dans laquelle Tsa et Tsb sont les périodes d'horloge respectivement du premier compteur (65) et du deuxième compteur (75).

6.  Procédé selon au moins l'une quelconque des revendications précédentes,
    caractérisé en ce que

dans la première station (C) :

comme initiateur de la mesure, un dispositif (83) de commande de terminal délivrant un signal (Sic) d'initiateur est utilisé,
alors, après qu'un dispositif (84) de commande de sous-voie a reçu une invitation à une mesure de distance, une signature (Dmsc) d'interrogation de distance produite dans le dispositif (83) de commande de terminal est envoyée, par l'intermédiaire d'un multiplexeur (81 ; 81") et d'un module (82) d'émission, vers la deuxième station (D),
alors, lors de l'émission de ce signal (Dmsc) de signature d'interrogation de distance, une heure de terminal est stockée temporairement dans une mémoire (102, 103) et transmise ensuite par l'intermédiaire d'un bus (851) au dispositif (83) de commande de terminal, ce qui correspond à un instant t1,

dans la deuxième station (D) :

dans un démultiplexeur (97) le signal reçu (Dmed) de signature d'interrogation de distance est sélectionné et est vérifié dans un discriminateur (99) de sous-voie qui, lors d'une reconnaissance de la signature d'interrogation détermine l'heure de terminal de la deuxième station (D), ce qui correspond à un deuxième instant t2,
alors l'envoi d'une réponse est déclenché afin qu'un signal (Sid) de commande soit émis sur un dispositif (94) de commande de sous-voie qui renvoie un signal (Dmsd) de signature de réponse de distance, par l'intermédiaire du multiplexeur (91) de sous-voie, à la première station (C),
alors, lors de l'envoi de ce signal (Dmsd) au moyen de la mémoire (103, 104), l'instant de l'émission de la réponse est déterminé, ce qui correspond à l'instant t3,

en outre, dans la première station (C) :

l'heure t4 de terminal de la réception du signal (Dmec) de signature de réponse de distance est déterminée, alors un signal (Kc) d'arrêt est envoyé par l'intermédiaire d'une porte OU (85) à la mémoire (103, 104), et les valeurs de mesure pour les temps t2 et t3 sont transmises par la sous-voie depuis la deuxième station (D) au dispositif (83) de commande de terminal, alors, le dispositif (83) de commande de terminal détermine l'instant t4 et effectue le calcul de la distance selon la formule suivante connue en général

$$L = c((t4 - t1) - (t3 - t2))/2 - Ko$$

dans laquelle t4 - t1 correspond au temps global de propagation et t3 - t2, au temps de traitement du côté de la deuxième station (D).

7. Dispositif de mesure de distance entre des stations (1, 2) reliées par une voie optique de communication et envoyant et recevant des données utiles, en particulier deux satellites dans l'espace, avec des compteurs pour déterminer le temps de propagation d'un signal (TR) entre les stations (1, 2) et un dispositif (73, 83, 93) de commande de terminal ayant un module de calcul pour multiplier ce temps de propagation du signal ($T_R$) par la vitesse de la lumière (c), dans lequel

- lesdits compteurs comprennent des compteurs pour la détermination du temps de propagation du signal ($T_R$), pour la détermination du temps global ($T_{Umlauf}$) de propagation ainsi que des temps de traitement ($T_1$) et ($T_2$) dans les deux stations (1, 2), ainsi qu'un autre module de calcul du dispositif (73, 83, 93) de commande de terminal pour déterminer le temps ($T_R$) de propagation du signal au moyen d'une soustraction des temps de traitement ($T_1$) et ($T_2$) du temps global ($T_{Umlauf}$) de propagation, et il a prévu
- une voie d'interrogation et de réponse pour obtenir une interrogation de la première vers la deuxième station et pour obtenir une réponse de la deuxième station vers la première,

 caractérisé en ce que

- pour régler la phase d'un laser d'émission sur la phase d'un laser de réception, un multiplexeur est prévu pour transmettre des bits de synchronisation, et
- une partie de ces bits de synchronisation forme une voie supplémentaire pour la voie d'interrogation et de réponse.

8. Dispositif selon la revendication 7,
 caractérisé en ce que
 la première et/ou la deuxième stations présentent des moyens d'émission et de réception qui sont constitués par un module (10 ; 40 ou 61, 66 ; 67, 69) de traitement de voie supplémentaire auxquels est associé un dispositif (11 ou 64, 65) de mesure de distance qui comprend un compteur (65) et/ou des mémoires (103, 104 ; 113, 114), qui est activé par un signal (28 ou Sia ou Sic) de début produit lors d'une interrogation de distance de la station initiatrice (A) et par un signal de commande (23 ou Ka ou Kc) produit lors de la réception d'un signàl de réponse émis par la deuxième station.

9. Dispositif selon la revendication 7,
 caractérisé en ce que
 la première et/ou la deuxième stations présentent un multiplexeur et un démultiplexeur de sous-voie qui comprennent un discriminateur de sous-voie pour obtenir sur la voie de données de communication l'interrogation de distance et la réponse correspondante au moyen d'altérations de bits de synchronisation des données utiles obtenues.

10. Dispositif selon l'une au moins des revendications 7 à 9,
 caractérisé en ce que

 la première et/ou la deuxième stations présentent un dispositif (63 ; 83 ou 73 ; 93) de commande de terminal qui par l'intermédiaire d'au moins un bus sont raccordés à un dispositif (64 ; 84 ou 74 ; 94) de commande de sous-voie et par l'intermédiaire d'au moins un autre bus sont raccordés à un discriminateur (69 ; 89 ou 79 ; 99),

et que le compteur (65 ou 75) ou des mémoires sont reliés, par l'intermédiaire d'un bus (651 ; 851 ou 751 ; 951) de données de distance, au dispositif (63 ; 83 ou 73 ; 93) de commande de terminal.

11. Dispositif selon la revendication 10,
    caractérisé en ce que
    le bus (651 ou 751) de données de distance est relié à un bus (631 ou 731) reliant le dispositif (63 ou 73) de commande de terminal au dispositif (64 ou 74) de commande de sous-voie, par l'intermédiaire duquel la liaison entre le compteur (65 ou 75) et le dispositif (63 ou 73) de commande de terminal est réalisée.

12. Dispositif selon la revendication 10,
    caractérisé en ce que
    le dispositif (83 ou 93) de commande de terminal est relié directement, par l'intermédiaire du bus (851 ou 951) de données de distance, à la mémoire (103, 104 ou 113, 114) qui se trouve dans un multiplexeur (81 ou 91) ou dans un démultiplexeur (141).

13. Dispositif selon l'une des revendications 7 à 12,
    caractérisé en ce que
    la première et/ou la deuxième stations présentent des moyens d'émission et de réception qui sont constitués d'un module (10, 40) de traitement de voie supplémentaire qui présente respectivement au moins un multiplexeur (17) ou un démultiplexeur (46), avec lesquels l'interrogation de distance et la réponse sont converties en des bits de sous-voie et/ou en des altérations de bits de synchronisation.

Fig. 1

Fig. 2

Fig. 3

**Fig. 4**

**Fig. 5**

**Fig. 6**

Fig. 7

Input 0 ──────┐
Input 1 ──────┤
              │  ┌─────────────────┐
              │  │                 │──── Output
              │  │          ·──── 61'
Input n ──────┤  │                 │
        D_MA     │    n:1 MUX      │
                 └─────────────────┘
                                        103
          101                    ┌──────────┐
 106    ┌─────────┐              │          │──── Time Data m
      ┌──┐│         │            │  ·       │──── Time Data m-1
──────┤  ││  ·      │            │          │
      └──┘│         ├────────────┤          │──── Time Data 0
CLOCK     └─────────┘            └──────────┘
              104
          ┌─────┐  ┌──────┐              Time Data m+x
          │     │  │  ·   │
          │     ├──┤      │              Time Data m+2
          │     │  │      │              Time Data m+1
          └─────┘  └──────┘
            102              ──── K_A
                        Time Event

# Fig. 8

Fig. 9

# Fig. 10

Fig. 11